# DEMANDE DE BREVET EUROPEEN

(11) **EP 1 083 113 A1**
(43) Date de publication de la demande: **14.03.2001**
(21) Numéro de dépôt: 00402471.7
(22) Date de dépôt: 08.09.2000
(51) Int. Cl.: B62D 6/02

(54) **Dispositif de direction assistée**

(30) Priorité: 10.09.1999 FR 9911344
(71) Demandeur: Renault, 92100 Boulogne Billancourt (FR)
(72) Inventeur: Bello, Jean Luc, 27540 Aubevoye (FR); Coffin, Florent, 27490 Ecardenville/Evre (FR)

(57) **Abrégé**

Dispositif de direction assistée destiné à être utilisé sur un véhicule motorisé comprenant des moyens de détection de couple (12), pour détecter un couple exercé par le conducteur du véhicule sur une unité de direction (15), et produire un signal représentatif du couple détecté, des moyens de détection de vitesse (13) pour détecter une vitesse de déplacement du véhicule et produire un signal représentatif de la vitesse détectée, une unité de puissance (14) pour exercer un couple d'assistance sur l'unité de direction (15) à la réception d'un signal de commande de couple d'assistance, un calculateur (10) pour élaborer ledit signal de commande de couple d'assistance, à partir du signal représentatif du couple exercé par le conducteur et du signal représentatif de la vitesse du véhicule, caractérisé en ce que le calculateur (10) comporte des moyens de correction pour limiter les variations du signal de commande de couple d'assistance dans le cas de fortes variations de la vitesse du véhicule.

## Description

La présente invention se rapporte à un dispositif de direction assistée pour un véhicule motorisé.

Dans un système de direction assistée conventionnel, le volant du véhicule est relié à une unité de direction. Le conducteur du véhicule exerce un couple de braquage sur le volant afin de piloter l'unité de direction. Une unité de puissance, telle qu'un moteur électrique ou des moyens hydrauliques, reliée à l'unité de direction, est susceptible d'exercer sur celle-ci un couple de braquage afin d'assister l'action du conducteur.

L'unité de puissance est pilotée par un calculateur qui reçoit deux types de signaux : des signaux représentatifs du couple exercé par le conducteur sur le volant, ces signaux étant issus d'un capteur de couple, et des signaux représentatifs de la vitesse du véhicule issus d'un capteur de vitesse du véhicule. Des lois d'assistance sont programmées dans la mémoire du calculateur. Ces lois consistent en un faisceau de courbes qui donnent pour un couple transmis par le conducteur et pour une vitesse de véhicule donnés, le couple d'assistance que doit générer l'unité de puissance. Entre deux courbes, les lois sont interpolées généralement de façon linéaire. Ainsi, globalement, la variation du couple d'assistance est quasiment continue.

D'une façon générale, il apparaît que pour un couple donné transmis par le conducteur, le couple d'assistance augmente lorsque la vitesse du véhicule diminue. Ainsi, par exemple, lors de manoeuvre de parking, le couple d'assistance sera élevé pour soulager le conducteur, et à haute vitesse, le couple d'assistance sera faible, pour que le conducteur conserve une bonne sensation de suivi de trajectoire.

De tels systèmes de direction assistée offrent donc une forte variation d'assistance si la vitesse du véhicule est elle-même amenée à varier fortement. Toutefois, dans certaines conditions de conduite, une telle variation peut s'avérer être gênante pour le conducteur du véhicule.

En effet, dans le cas où les variations de vitesse du véhicule sont faibles, le conducteur peut s'habituer facilement à la variation du couple d'assistance. Toutefois, dans le cas de décélérations ou d'accélérations importantes, les variations du couple d'assistance peuvent s'avérer être brutales et consister une gêne pour le conducteur. Par exemple, sur une bretelle de sortie d'autoroute en cas de freinage tardif, le conducteur peut commencer son action avec un certain couple conducteur associé avec un couple d'assistance déterminé. Lors de la décélération du véhicule, le couple d'assistance augmentant, le conducteur est obligé de modifier son effort pour conserver, par exemple, le même braquage des roues.

La présente invention vise à obtenir un système de direction assistée limitant la variation du couple d'assistance dans le cas de fortes accélération et décélération du véhicule.

Dans ce but, elle propose un dispositif de direction assistée destiné à être utilisé sur un véhicule motorisé comprenant des moyens de détection de couple, pour détecter un couple exercé par le conducteur du véhicule sur une unité de direction, et produire un signal représentatif du couple détecté, des moyens de détection de vitesse pour détecter une vitesse de déplacement du véhicule et produire un signal représentatif de la vitesse détectée, une unité de puissance pour exercer un couple d'assistance sur l'unité de direction à la réception d'un signal de commande de couple d'assistance, un calculateur pour élaborer ledit signal de commande de couple d'assistance à partir du signal représentatif du couple exercé par le conducteur, et du signal représentatif de la vitesse du véhicule, caractérisé en ce que le calculateur. comporte des moyens de correction pour retarder les variations du signal de commande de couple d'assistance dans le cas de fortes variations de la vitesse du véhicule.

Selon une autre caractéristique de l'invention, les moyens de correction modifient le signal représentatif de la vitesse du véhicule pour retarder une variation du signal de commande de couple d'assistance lors de grandes variations de la vitesse du véhicule.

Selon une autre caractéristique de l'invention le calculateur comporte une zone de mémoire où sont préprogrammées des lois de commande adaptées pour permettre la détermination du signal de commande de couple d'assistance à partir du signal représentatif du couple exercé par le conducteur, et du signal issu des moyens de correction du signal représentatif de la vitesse du véhicule.

Selon une autre caractéristique de l'invention, les moyens de correction du signal représentatif de la vitesse du véhicule comprennent des moyens pour réaliser un filtrage du type passe-bas dudit signal.

Selon une autre caractéristique de l'invention, le filtrage est du type filtrage passe-bas du premier ordre.

Selon une autre caractéristique de l'invention, le filtrage est réalisé avec une fréquence de coupure est inférieure à 1 hertz.

D'autres caractéristiques et avantages de l'invention apparaîtront à la lecture de la description qui va suivre en référence aux dessins dans lesquels :
- la figure 1 représente un bloc diagramme d'un dispositif de direction assistée selon la présente invention,
- la figure 2 représente un exemple de lois d'assistance utilisées par un dispositif de direction assistée selon la présente invention,
- la figure 3 représente de façon le principe de fonctionnement du dispositif selon l'invention,
- la figure 4 représente un exemple de l'évolution, en fonction du temps, de courbes représentatives respectivement de la vitesse réelle du véhicule, et de la vitesse issue des moyens de correction.

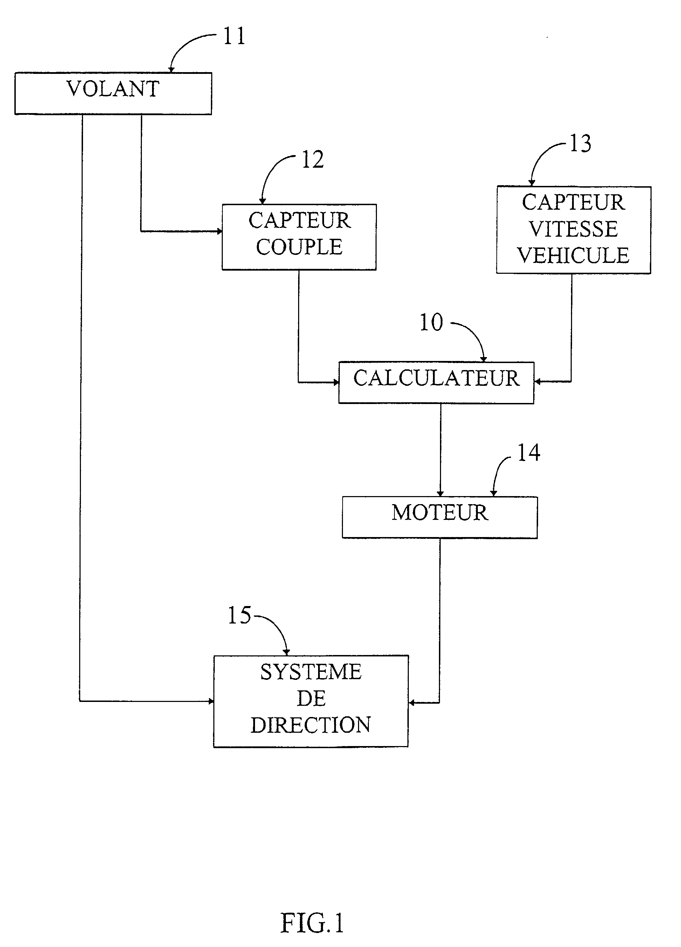

La figure 1 représente une disposition générale d'un dispositif de direction assistée destiné à être utilisé sur un véhicule à moteur tel qu'un véhicule automobile, ce dispositif étant conforme selon la présente invention.

Le conducteur du véhicule, suivant la manoeuvre à accomplir, exerce sur le volant 11 du véhicule un couple conducteur déterminé, *C*, qui est transmis au système de direction 15. Une unité de puissance 14 est adaptée pour transmettre à ce même système de direction 15 un couple d'assistance, *C*_{*a*}*,* afin de soulager le conducteur. Cette unité de puissance 14 peut consister en un moteur et/ou des moyens hydrauliques. Par la suite, l'unité de puissance 14 sera considérée comme étant un moteur électrique 14, les moyens d'alimentation dudit moteur 14 n'étant pas représentés.

Le moteur 14 est piloté par un calculateur 10 qui lui transmet un signal de commande du couple d'assistance, *C*_{*a*}, à exercer.

Le calculateur 10 reçoit, d'une part, un premier signal représentatif de la vitesse du véhicule *V*, émis par un capteur de la vitesse du véhicule 13, et d'autre part, un second signal, représentatif du couple exercé par le conducteur, *C*, sur le volant 11, issu d'un capteur de couple 12.

Le capteur de vitesse 13 et le capteur de couple 12 correspondent à des systèmes dont le principe de fonctionnement est connu en soi.

Le calculateur 10 élabore à partir de ces deux signaux un signal de commande de couple d'assistance, *C*_{*a*}, à produire par le moteur 14. L'élaboration de cette commande utilise des lois d'assistance qui sont préprogrammées dans la mémoire du calculateur 10.

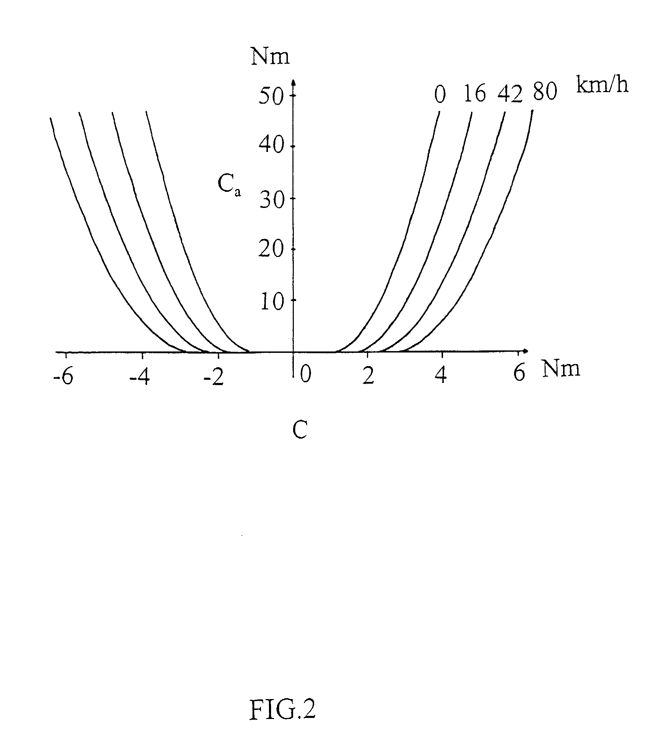

Un exemple de telles lois est représenté sur la figure 2. Pour un couple conducteur, *C*, donné, le couple d'assistance, *C*_{*a*}, à transmettre varie en fonction d'une valeur *V*_{*m*}, qui, dans l'art antérieur correspond à la vitesse du véhicule *V*, mais qui, dans le dispositif selon la présente invention correspond à une vitesse de véhicule modifiée, *V*_{*m*}, tel qu'il sera exposé plus en détails par la suite. La figure 2 donne, à titre d'exemple, un faisceau de quatre courbes, pour des vitesses, *V*_{*m*}, dont les valeurs sont 0 km/h, 16 km/h, 42 km/h et 80 km/h. En pratique, la densité du faisceau de courbes est de l'ordre d'une courbe tous les km/h.

Entre deux courbes, les lois sont interpolées de façon linéaire par le calculateur 10, de façon à ce que la variation du couple d'assistance, *C*_{*a*}, demandé soit quasiment continue.

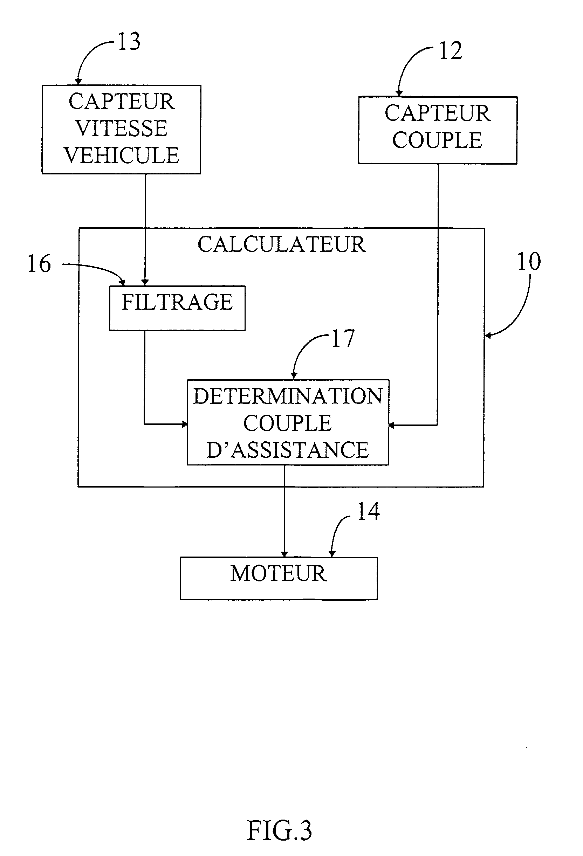

La figure 3 représente le principe de fonctionnement du calculateur 10.

Le calculateur 10 reçoit directement le signal, issu du capteur de couple 12, représentatif du couple, *C*, exercé sur le volant 11 par le conducteur, ainsi qu'un signal *V*, qui correspond au signal issu du capteur de vitesse 13.

Un filtrage 16 est réalisé sur le signal représentatif de la vitesse *V* du véhicule. Le filtre utilisé consiste en un filtre passe-bas du premier ordre, dont le principe de réalisation est connu en soi. Le signal issu du filtrage 16 correspond à une vitesse modifiée *V*_{*m*}. A partir de ce signal et du signal représentatif du couple *C* exercé par le conducteur sur le volant 11, le calculateur 10 détermine, à l'étape 17, le signal de commande du couple d'assistance à fournir *C*_{*a*}, à partir des lois de commande préprogrammées dans sa zone de mémoire.

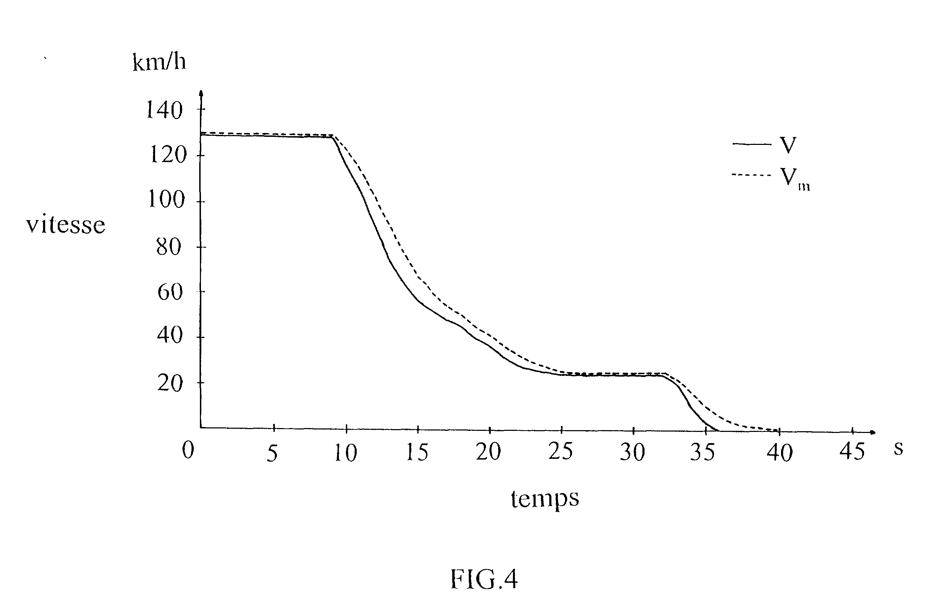

La figure 4 représente un exemple d'influence d'un filtre passe-bas sur le signal représentatif de la vitesse *V* du véhicule. La vitesse réelle *V* du véhicule est indiquée en trait plein tandis que la vitesse modifiée *V*_{*m*}, issue du traitement de la vitesse réelle *V*, par le filtre est indiquée en trait pointillé. Cet exemple représente une manoeuvre de freinage relativement rapide et irrégulière, correspondant par exemple à un freinage tardif sur une bretelle de sortie d'autoroute.

Il apparaît sur la figure 4 que l'action du filtre est équivalente à retarder légèrement l'apparition de variations de la vitesse réelle *V* du véhicule. Les variations de vitesse sont d'autant plus retardées qu'elles sont importantes. Ainsi, dans le cas de faible variation, la valeur de la vitesse modifiée, *V*_{*m*}, est-elle pratiquement égale à celle de la vitesse réelle, *V*, les deux valeurs étant identiques dans le cas où la vitesse réelle *V* du véhicule est constante.

Le signal issu du calculateur 10 représentant un signal de commande de couple d'assistance *C*_{*a*}, envoyé au moteur 14, sera donc légèrement retardé par rapport au cas où le calculateur 10 aurait pris directement en compte la vitesse réelle *V* du véhicule pour élaborer un signal de commande de couple d'assistance *C*_{*a*}.

Le filtre utilisé, du type passe-bas, est limité au premier ordre. Avec des filtres d'ordre supérieur, des oscillations pourraient apparaître au niveau de la vitesse modifiée *V*_{*m*}, qui seraient à l'origine de variations au niveau du couple d'assistance, *C*_{*a*}, fourni par le moteur 14, source de gêne pour le conducteur du véhicule.

La valeur de la fréquence de coupure du filtre est déterminée de façon à ce que le retard engendré ne soit pas trop important, ce qui pourrait aussi présenter une gêne pour le conducteur. Typiquement, elle est préférentiellement inférieure à 1 hertz. Sur l'exemple représenté sur la figure 4 , la fréquence de coupure est fixée à 0.5 hertz. Dans cette exemple, le retard maximum entre la vitesse réelle *V*, et la vitesse modifiée *V*_{*m*}, est de 3 secondes.

La présente invention n'est nullement limitée au mode de réalisation décrit et illustré qui n'a été donné qu'à titre d'exemple. Au contraire, l'invention comprend tous les équivalents techniques des moyens décrits ainsi que leurs combinaisons si celles-ci sont effectuées suivant son esprit.

## Revendications

1. Dispositif de direction assistée destiné à être utilisé sur un véhicule motorisé comprenant des moyens de détection de couple (12), pour détecter un couple exercé par le conducteur du véhicule sur une unité de direction (15), et produire un signal représentatif du couple détecté, des moyens de détection de vitesse (13) pour détecter une vitesse de déplacement du véhicule et produire un signal représentatif de la vitesse détectée, une unité de puissance (14) pour exercer un couple d'assistance sur l'unité de direction (15) à la réception d'un signal de commande de couple d'assistance, un calculateur (10) pour élaborer ledit signal de commande de couple d'assistance, à partir du signal représentatif du couple exercé par le conducteur et du signal représentatif de la vitesse du véhicule, caractérisé en ce que le calculateur (10) comporte des moyens de correction pour retarder les variations du signal de commande de couple d'assistance dans le cas de fortes variations de la vitesse du véhicule.

2. Dispositif de direction assistée selon la revendication 1, caractérisé en ce que les moyens de correction modifient le signal représentatif de la vitesse du véhicule pour retarder une variation du signal de commande de couple d'assistance lors de grandes variations de la vitesse du véhicule.

3. Dispositif de direction assistée selon les revendications 1 ou 2, caractérisé en ce que le calculateur (10) comporte une zone de mémoire où sont préprogrammées des lois de commande adaptées pour permettre la détermination du signal de commande de couple d'assistance à partir du signal représentatif du couple exercé par le conducteur, et du signal issu des moyens de correction du signal représentatif de la vitesse du véhicule.

4. Dispositif de direction assistée selon l'une des revendications 1 à 3, caractérisé en ce que les moyens de correction du signal représentatif de la vitesse du véhicule comprennent des moyens pour réaliser un filtrage du type passe-bas dudit signal.

5. Dispositif de direction assistée selon la revendication 4, caractérisé en ce que le filtrage est du type filtrage passe-bas du premier ordre.

6. Dispositif de direction assistée selon la revendication 5, caractérisé en ce que le filtrage est réalisé avec une fréquence de coupure inférieure à 1 hertz.
